Europäisches Patentamt

European Patent Office

Office européen des brevets

(19)

(11) **EP 1 338 948 A1**

(12) **EUROPEAN PATENT APPLICATION**

(43) Date of publication:
27.08.2003 Bulletin 2003/35

(51) Int Cl.⁷: **G06F 1/32**

(21) Application number: **02354035.4**

(22) Date of filing: **25.02.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Hewlett Packard Company,**
**a Delaware Corporation**
**Palo Alto, CA 94304 (US)**

(72) Inventor: **Meynard, Olivier**
**38220 Vizille (FR)**

(74) Representative: **Lloyd, Richard Graham (GB)**
**Hewlett-Packard France**
**Intellectual Property Section**
**Legal Department**
**Etablissement de Grenoble**
**38053 Grenoble Cedex 09 (FR)**

(54) **Clock control arrangement for a computing system**

(57)     A computing system including a computing unit, such as a processor for instance, which is driven by a clocking arrangement generating at least a first clock having a first value, and a second clock having a higher frequency value which is used for an alternate clocking system. The system includes hardware detection means for analysis the number of transactions existing on the processing bus of the processor for the purpose of detecting a temporary high activity or saturation of the processing unit, and means active in response of said detection for switching the clocking of the processor to said second clock . The clock control may be used for either providing an effective power management system or also a safe overclock control of the speed of the processor. A new arrangement of a processing chip having a overclock request control lead is provided.

Fig. 2

EP 1 338 948 A1

# Description

## Technical field of the invention

The invention relates to computing systems and more particularly to a clock control arrangement for a computer system.

## Background art

The need for system performance in the field of data computing in general, and personal computers in particular, continuously increases with the development of new applications and software programs which require higher and higher levels of performance.

In the field of personal computers (P.C.) for instance, each new release of a commercial software program offers new functions to customers normally at the cost of additional requirements in terms of computing resources.

Computer manufacturers have continually to tackle the problem of increasing the processing resources of their products.

This very general problem can be handled in different ways. A more direct way to increase the system performance of a computer at the level of the manufacturing process being used is to increase the density of the semiconductor elements located on a chip. In particular, the reduction of the distances between elementary switching components permits the frequency at which the semiconductor will be able to operate to be increased and, thereby, the processing power. Although this solution is the one which is currently applied in the field of semiconductor manufacturing technology, its main drawback is the huge development costs which are involved.

Another possibility to increase the system performance of a given processor chip results from the margin left by the manufacturer of the semiconductor product in the definition of the voltage and the frequency of the clock driving the processor. A result of this is the development of a kind of "clock chipping" industry which concentrates on the possibility of running a computer at a frequency somewhat higher than the specification defined by the manufacturer. However, this tends to substantially increase the heat dissipation and the temperature to be evacuated on the chip and further, the continuous clocking of the processors out of the range specified by the product manufacturer might degrade the performance of the semiconductor product and increase the exposure to failures and irreversible damage.

This is a reason why the continuous overclocking of a semiconductor chip such as a processor, is not generally recommended by the product manufacturers.

However, in some cases, it could be desirable to increase the system performance of a computing system, in a safe manner which does not expose the chip to irreversible damage.

## Summary of the invention

It is an object of the present invention to provide a process and an apparatus for increasing the processing resources of a processor of a given technology level, while staying in a safe operating mode.

In general terms this is achieved through a clock control arrangement that allows adjustment of the frequency of the driving clock in accordance with the activity of the computing system.

More specifically there is provided a clock control arrangement for a computing system including a processing unit, said control arrangement comprising: a clock generator for generating at least a first clock signal having a first frequency and a second clock signal having a second higher frequency; circuitry for monitoring the activity of said processing unit; and a switching arrangement for switching the clocking of said processor to said second clock in response to the detection of increased activity of said processing unit.

Preferably, the activity of the computing unit is monitored by means of a determination of the number of transactions being handled at a given instant by the processing unit.

This results in an effective control of the clocking of the computer system based on a close and precise monitoring of the activity of the processing unit. In at least preferred embodiments this is carried out independently of the operating system which is running within the computer system, and also independently of the power management functions which operate in the system. The computing unit is monitored with a very low response time which is much lower than that which is inherent in the conventional power management techniques handled by the operating system which, further, tends to increase when the processing unit becomes saturated and overwhelmed by a high number of transactions being active on the processor.

Preferably, when the detection means detects a temporary high activity or even a saturation of the processing unit, the clocking arrangement is switched to the clock having a higher frequency.

Preferably, when the processing unit incorporates a PENTIUM ™ family type processor, the clocking control process is based on the information which is reported by the Block Next Request (B.N.R.) control lead of the processor. In one embodiment, there is provided the counting of the number of transactions which are pending on the processor bus.

In one preferred embodiment, a watchdog mechanism is used for automatically switching back to the lower frequency clock after the expiration of a predetermined period.

Another aspect of the invention provides a power management system for a computing system including a processing unit, such as a processor, and a clocking arrangement generating at least a first clock having a first frequency and a second clock having a second higher frequency, said clocking arrangement comprising:

- means for monitoring the activity of said processing unit;
- means for switching the clocking of said processor to said first clock in response to a low level of activity of said processing unit.

Preferably, the control of the clocking of the processing unit is based on the use of:

- circuit means for analysing the number of transactions existing on the processing bus of the processor for the purpose of detecting a temporary high activity or saturation of said processing unit;
- means for switching the clocking of the processor to said second clock in response to said detection.

In one embodiment, the clocking control is based on the monitoring of the number of START and STOP operations on the bus of said processor.
If the computing system is based on a PENTIUM™ type processor, the control of the clocking is based on the analysis of the information reported by said control lead Block Next Request (B.N.R.)
A further aspect of the invention consists in the realization of a semiconductor chip which is operable at at least a first and a second clock frequency, the frequency of said second clock being at a higher value than the frequency of said first clock. The processing unit can further include:

- means for monitoring a state of high activity of said processing unit;
- means for deriving from said monitoring a control signal requesting said first or said second clock frequency.

In one embodiment, there is monitored the number of transactions active on said processing unit for the purpose of determining a temporary high activity or saturation of said processing unit. An overclock request control signal is provided out of said semiconductor chip in response to a temporary detection of high activity or saturation of said processing unit.
Preferably, the semiconductor chip includes means for sensing the internal temperature of said chip and means for forcing the switching back of said overclock request to said first clock in response to said detection of increase of the temperature.

**Description of the drawings**

An embodiment of the invention will now be described, by way of example only, with reference to the accompanying drawings, wherein:

Figure 1 illustrates the cascade of delays which are involved in a basic driver-receiver architecture.

Figure 2 illustrates a basic clock arrangement circuit which is controlled by the monitoring of the bus activity of a processor.

Figure 3 shows how the START and STOP operations can be monitored in order to compute a value representative of the activity of the processor.

Figure 4a and 4b respectively illustrate the CPU activity and the bus activity of a processor.

Figure 5 illustrates a basic architecture of a processor incorporating a specific circuit for providing overclock request control signal.

**Description of the preferred embodiment of the invention**

There will now be described in detail how an adjustment of the operating speed of a computing system can be achieved based on a monitoring of the activity of the processing unit which is included within the system.
In one embodiment, the clock control can be used for the purpose of providing an effective power management system since the switching between the two clocks driving the system can be dynamically achieved, without the response time required by the operating system. The switching between the first and the second frequencies remains independent of and transparent to the operating system and conventional power management techniques and, therefore, can achieve a close adjustment of the proper frequency to be supplied to the processing unit in accordance with the activity of the processor. Such close control of the frequency is not possible at the level of the operating system since, firstly, this would result in a much higher response time and, further, the response time would tend to increase when the system becomes saturated.
The description below will concentrate on an effective "overclocking" arrangement which still allows effective gain of system performance during short peaks of activity while ensuring safe condition of running. Indeed, the processor can be operated at a first frequency which is chosen to comply with the specifications of the product manufacturer, thus ensuring a safe running condition. The following considerations should be recalled in the case of the perspective of "overclocking" a processing unit.
Generally speaking, the frequency of the clocks which can be used in a synchronous system should not exceed a value which depends upon the internal characteristics of the electronic components, and particularly the internal delays required for establishing the appropriate voltage within the internal components as well as for propagating the signal from the drivers to the receivers.

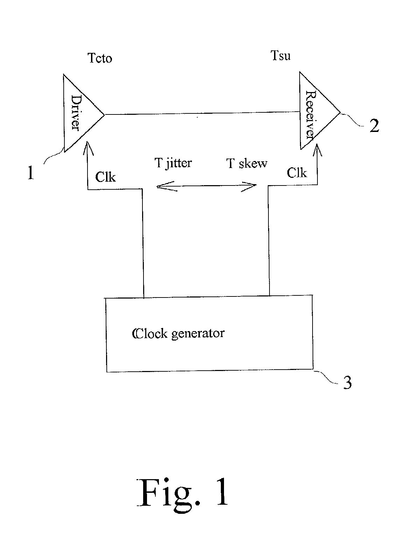

Figure 1 illustrates the sequence of delays which is involved in a very basic circuit comprising a driver 1 and a receiver 2 which are both clocked by a clock generator 3. Considering the skew and jitter characteristics of the clock generator 3 - represented by the values $T_{skew}$ and $T_{jitter}$, as well as the propagation time of the signal from the driver to the receiver - hereinafter called $T_p$, it can be seen that the switching speed - or correspondingly the cycle period of the clock generator 3 should be at least equal to:

$$T > T_{cto} + T_p + T_{su} + T_{skew} + T_{jitter}$$

Where

$T_{cto}$ is the time required between the arrival of the clock of the input buffer and the effective output of the signal.

$T_{su}$ is the minimum setup time of the input buffer before the arrival of the next clock period

$T_{skew}$ and $T_{jitter}$ are respectively the potential skew between two copies of the clock and the clock to clock jitter between the latter.

It can be drawn from the above formula that the potential for increasing the clock frequency is limited by internal delays of the components forming an electronic circuit. It should be observed that the $T_{cto}$ and $T_{su}$ parameters closely depend on the temperature and, correspondingly, this tends to seriously limit the possibility of increasing the frequency at which the system may be continuously operated since any increase of frequency correspondingly increases the power dissipation and thus the temperature within the chip.

There will be disclosed hereinafter one embodiment which provides controlled overclocking while limiting the increase of temperature since the overclocking is limited to a short time period that can be closely controlled.

More particularly, this allows an electronic component, such as a processor or a video ASIC chip, to be used close to its maximum possible switching speed, while ensuring safe operation.

To achieve this, there is provided a circuit which analyses the activity of the processing unit, for instance a given processor, and particularly the activity existing on particular predetermined locations of the latter. In one embodiment, the bus of the processor is precisely monitored for the purpose of determining, at every instant, the number of transactions which are pending.

Different possibilities can be used for determining the activity of the processor or any ASIC circuit. In the case of a PENTIUM™ processor, advantage can be taken of the control signal existing on the *Block Next Request* control lead which is representative of the occurrence of a temporary saturation of the processor. In another embodiment, a more precise adjustment can be obtained by computing a value that is representative of the number of transactions pending on the bus.

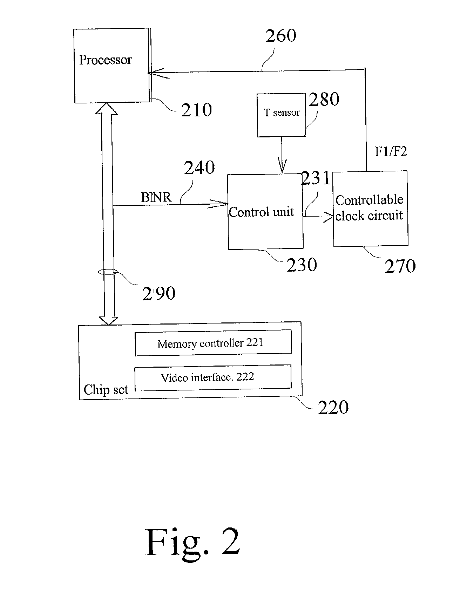

Figure 2 more particularly illustrates the architecture of a computing system, such as a motherboard including a PENTIUM ™ type processor 210 (marketed by Intel Corp) or a video card including a ASIC chip. Processor 210 is associated with a corresponding chipset 220 which includes a memory controller 221 and a video interface 222. The general operation of these components is well-known and will not be further described herein.

Chipset 220 communicates with processor 210 via Gun Transceiver Logic (GTL) bus 290 which includes a set of control leads which are used for the purpose of monitoring the activity of the processor. In particular, advantage can be taken of the Interrupt control lead of the processor (not shown), but also the *Block Next Request* (B.N.R.) control lead 240 existing on the PENTIUM™ type bus which, when activated, is representative of a state of saturation existing on the bus.

The monitoring of the activity of the processor *Block Next Request* (B.N.R.) control lead 240 provides a close monitoring of the saturation of the processor which is independent of the main operating software.

The control signal existing on BNR control lead 240 is transmitted to a control unit 230 which performs an analysis of the activity of the processor 210. In one embodiment, control unit 230 also receives information representative of the temperature of the chip - either external or internal - by means of a temperature sensing device 280. The control unit 230 derives from the information reported by the GTL bus and, possibly the temperature sensing device 280, a control signal on a control lead 231 which is transmitted to a controllable clock circuit 270 which produces the clock required for driving processor 210.

In one embodiment, clock circuit 270 produces at least two different clock signals, a first one having one given frequency (F1) and a second one of a higher frequency (F2). In accordance with the state of the control lead 231, clock circuit 270 provides a clock signal on a lead 260, at a frequency which is either F1 or F2. Clock signal on lead 260 is transmitted to processor 210 and used for driving the associated circuits on the chipset 220.

By establishing a direct connection between the activity of the GTL bus reported by the BNR signal, the speed of operation of the processor 210 can be dynamically controlled.

The control of the frequency of the processing unit can be used either for carrying out an overclocking or a downclocking of the processor.

In the case of overclocking, the BNR control signal is used for controlling clock circuit 270 so that the latter produces the higher frequency value to the processor 210. This provides an increase of the performance of the computing system.

Generally speaking it is envisaged that the higher value F2 of the second clock be chosen to be within the range of frequencies being compatible with the safe operation of the processor so as to secure a safe operating of the processor 210. However, should the designer wish to use the system in a case of "overclocking" that is exceeding the limits defined by the manufacturer of the processor, they should carefully choose the particular value being used so as to remain within the limits of the formula which is given above.

Whatever the particular use of the clocking arrangement, be it for overclocking for gaining speed or for downclocking for power management, the control unit 230 can use the information reported by the processor bus for the purpose of conducting a statistical analysis of the activity of the processor. In this respect, it could be advantageous to have a more precise indication of the level of activity of the processor, and particularly the accurate number of transactions on the GTL bus. This can be achieved by computing this number from the START and STOP commands which are available on the bus and which are representative of the direct activity of the processor which can be precisely analysed by control unit 230 for the purpose of controlling controllable clock circuit 270.

More particularly, the number of transactions pending can be calculated by implementing a counter that is incremented each time a "Transaction START" condition is found on the bus and decremented each time a "Transaction STOP" is detected. In this embodiment, this number of transactions pending is referred to as "IOQ" ( In Order Queue). When IOQ = 0, the bus is idle, When IOQ = IOQmax (the maximum is defined by the internal logic agent that is limited by its logic depth that cannot follow more than a IOQmax number of transaction at a time). Generally speaking, once IOQ reaches a given level, there is a strong probability that increasing the clock frequency will result in a direct increase of the visible performance.

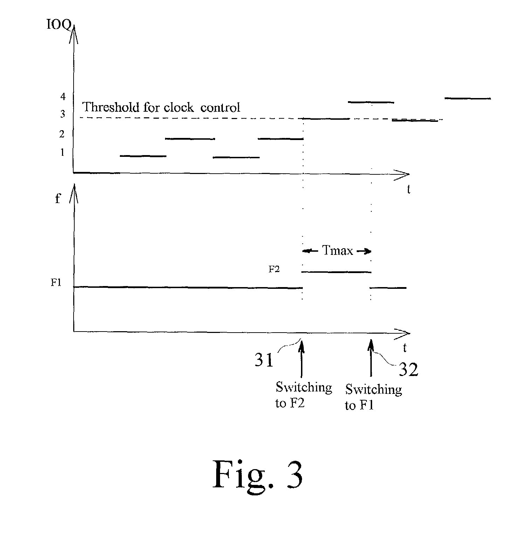

With respect to figure 3, there is illustrated a chronogram representing the evolution of the IOQ representative of the current transactions which are pending. In one embodiment, control circuit 230 uses a threshold value for controlling clock circuit 270 to switch from the lower speed to the higher speed. It can be seen that when the number transactions increases, or even when a temporary saturation condition is detected - which may occur for instance when the user launches a new application and opens a new window in an operating system such as WINDOWS™ for instance - the processor is switched to the second clock - as represented by arrow 31 in figure 3 - for the purpose of increasing the system performance. Since the second clock is only operated during a brief instant, no heat or very negligible heat dissipation occurs inside the semi-conductor chip. This ensures a safe condition of the processor, ie non-destruction of the semi-conductor chip and also failure free operating conditions.

Preferably, in order to remain within a temperature range that allows efficient overclocking there is provided a watchdog circuit which automatically switches back the clocking of the process to the first clock so as to return to the lower frequency after a predetermined period $T_{max}$, as illustrated by arrow 32 in figure 3.

While overclocking a semiconductor chip is normally not safe and not recommended by the product manufacturer, it can be seen that the semiconductor chip can be better operated by means of a better control of the voltage (V) and/or the temperature (T) of the chip.

In one particular embodiment, the security is still enhanced with means for detecting the temperature of the semiconductor chip, so as to ensure safe operation of the processor. The temperature detection means can be external and located on the system cooler of the processing unit. Alternatively, the temperature detection means can be located internally within said processor, for instance based on a thermal diode.

Controllable clock circuit 270 can advantageously include a Phase Locked Loop (PLL) circuit which provides a wide range of different frequencies for the clock control. In this case, control lead 231 can be replaced by a control bus for the purpose of defining the particular frequency among the range of frequencies available at the PLL circuit which will be used for driving processor 210. Therefore, there is provided a precise adjustment of the frequency of the clocking driving processor 210. As explained above, the clock control can be used either for providing overclocking or downclocking.

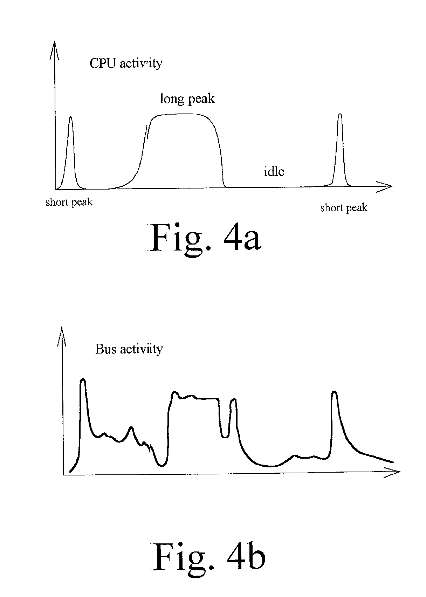

It can be seen that the architecture described in figure 2 enables a close and precise clocking control of the frequency of operation of a processing unit such as a processor. This is different from the known mechanisms used in the power management techniques known in the art, for instance used in the WINDOWS ™ operating system. Conversely to many known techniques, which monitor inactivity of the processing unit beyond a predetermined relatively long period, for instance a few minutes, for adjusting the frequency of the processor, the invention dynamically controls and adjust the frequency of operation of the processor using direct knowledge of the activity of the processor, and its temperature. Therefore, it is possible to achieve dynamic control and adjustment of the clocking of a system, and particularly, to substantially increase the system performance during short peaks of activity as shown in figure 4a and 4b, for instance when the user is opening a window for instance. The temporary gain in system performance is favorably perceived by the user of the computer.

Figure 4a illustrates a representation of the CPU activity, as seen for instance in the Windows task manager, while figure 4b illustrates the bus activity. The two figures show the strong correlation existing between the two lines and, therefore, the effective control of the overclocking which can be achieved by precisely monitoring the bus activity.

The switching to the higher clock during a short period does not result in a significant increase of the temperature of the semiconductor chip. For the purpose of increasing security, and in order to avoid the effects of the high temperature and the irreversible damage which such temperature might cause to the chip, there is provided a special arrangement which is used for forcing the switching to the first clock when a set of security conditions are no longer fulfilled.

Many different embodiments can be used for securing the controlled switching process.

In one embodiment, a watchdog mechanism, based on a monostable, is used to force back the switching of the clock speed after a predetermined period.

In a second embodiment, the computing system, and more particularly the processor is fitted with a set of temperature detection devices. Different arrangements are possible should the designer wish to monitor external or internal temperature points.

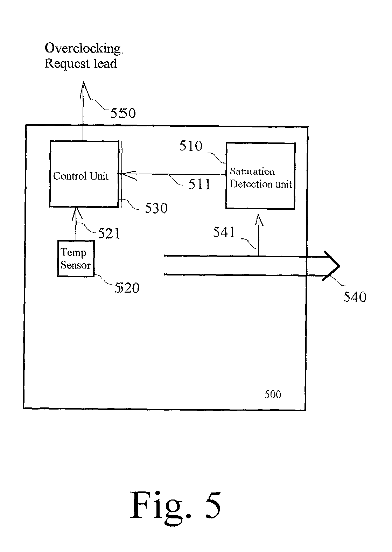

With respect to figure 5, there is now described how the conventional architecture of a semiconductor computing device can be modified to introduce clock control capability. The description will particularly cover the structure of a processor but it should be clear that the architecture of any kind of computing unit, such as a specialized ASIC for a video card for instance, can be derived from that structure which can take benefit of the new clocking arrangement. The ASIC circuit includes, in addition to the usual components, means for determining the occurrence of a state of saturation within said processor and means for deriving from said saturation information an "overclock request" signal which is reported out of the chip and transmitted to a processing unit for the purpose of controlling the clocking system. In one embodiment, illustrated in figure 5 showing ASIC circuit 500 (e.g. a processor), there is included temperature sensing means 520 which provides a measurement of the internal temperature at a particular location of the chip. The processor may include numerous locations internal to the chip for the purpose of sensing the temperature internal to the chip. In one embodiment, a thermal diode offering a $V_{be}(I)$ characteristic varying in accordance with the temperature can be used for providing a safe indication of the temperature of the circuit.

Processor 500 further includes a saturation detection unit 510 for detecting a saturation condition within said processor. In one embodiment, saturation detection unit 510 monitors the transactions on the bus 540, what is represented, in figure 5, by the information carried on a lead 541.

Processor 300 further includes a control unit 530 which receives the information provided by saturation detection unit 510 as well as the information provided by temperature sensing means 520, respectively on a lead 511 and 521. In accordance with the information provided by the latter leads, control unit 530 computes and derives an overclocking request control signal on a lead 550 which can be output from the processor 400.

In one embodiment, the watchdog mechanism which was described above and whose effect is illustrated in figure 4b is embodied within the processor 500, and particularly within control unit 530.

Therefore, it can be seen that the arrangement proposed permits the level of saturation of the processor to be monitored for the purpose of controlling, in a way that ensures a safe operation condition for the processor, the clocking frequency which drives the processor.

Such an arrangement is most useful for the purpose of increasing the system performance of a computing systems of a given technology, while keeping the system cool enough to ensure reliable operation without exposing the systems to a irreversible damage due to abnormal heat dissipation.

In one embodiment, the amplitude of overclocking - i.e. the variation of the frequency around the central frequency - is adjusted depending on the current silicon temperature.

Further, it should be noted that a similar technique can be used to provide a power management arrangement which permits a high powerful processing unit to be used at the normal frequency speed when the activity of the processor is high and to be used at the lower frequency value when the system is less active. By monitoring the precise conditions of operation of the processors, and particularly the level of current transactions, the computing system can adapt the appropriate frequency to be used for driving the processor. It should be noticed that, conversely to the known systems offering dual frequency speeds when the user does not use his/her computer after a period of 2 minutes for instance, the switching between one frequency and the other is dynamic since it is hardware-based and thus can act with a very low response time to closely follow the activity of the processor - by the analysis of the requests on the system bus - and thus the proposed solution offers far more effectiveness in this respect.

## Claims

1. Clock control arrangement for a computing system including a processing unit, said control arrangement comprising:

   a clock generator for generating at least a first clock signal having a first frequency and a second clock signal having a second higher frequency;
   circuitry for monitoring the activity of said processing unit; and
   a switching arrangement for switching the clocking of said processor to said second clock in response to the detection of increased activity of said processing unit.

2. Clock control arrangement in accordance with claim 1 wherein the monitoring of said activity is based on the analysis of the number of transactions existing on a processing bus of the processing system.

3. Clock control arrangement according to claim 2 wherein the switching of the clocking from the first to the second clock is derived from a monitoring of the number of START and STOP operations on the processing bus.

4. Clock control arrangement according to claim 2 or claim 3 wherein the computing system is based on a PENTIUM™ type processor and that the detection of activity of said processing unit is based on the analysis of the information reported by the Block Next Request (B.N.R.) control lead.

5. Clock control arrangement according to any preceding claim including means for detecting an increase of the temperature of the processing unit, and means for forcing the switching back to said first clock in response to said detection of increase of the temperature.

6. Clock control arrangement according to claim 5 wherein the temperature detection is based on the sensing of the temperature external to said processor.

7. Clock control arrangement according to any preceding claim including a watchdog mechanism for switching back to said first clock after the expiration of a predetermined period.

8. Clock control arrangement according to any preceding claim including a Phase Locked Loop (PLL) producing a set of different frequencies which are used for driving the processor in accordance with the activity monitored on the processor bus.

9. Clock control arrangement according to any preceding claim adapted to control the clocking of a processor or the processing unit of a video card.

10. Power management system for a computing system including a processing unit, such as a processor, and a clocking arrangement generating at least a first clock having a first frequency and a second clock having a second higher frequency, said clocking arrangement comprising:

    - means for monitoring the activity of said processing unit;
    - means for switching the clocking of said processor to said first clock in response to a low level of activity of said processing unit.

11. Power management system for a computing system in accordance with claim 10 including:

    - a circuit for analysing the number of transactions existing on the processing bus of the processor for the purpose of detecting a level of activity of said processing unit;
    - means for switching the clocking of the processor to said second clock in response to said detection.

12. Power management system according to claim 10 including means for monitoring of the number of START and STOP operations on the bus of said processor.

13. Power management system according to claim 9 wherein the computing system is based on a PENTIUM™ type processor and that the detection of activity of said processing unit is based on the analysis of the information reported by the Block Next Request (B.N.R.) control lead.

14. Semiconductor chip comprising a processing unit operational at least at a first and a second clock frequency, the frequency of said second clock being at a higher value than the frequency of said first clock, said chip further including:

    - means (510, 530) for monitoring a state of high activity of said processing unit;
    - means (550) for deriving from said monitoring a control signal requesting said first or said second clock frequency.

15. Semiconductor chip in accordance with claim 14 including:

    - means (510) for monitoring the number of transactions active on said processing unit for the purpose of determining a temporary high activity or saturation of said processing unit;
    - means for generating an overclock request control signal for output by said semiconductor chip in response to a temporary detection of high activity or saturation of said processing unit.

16. Semiconductor chip according to claim 14 including means (280) for sensing the internal temperature of said chip and means for forcing the switching back of said overclock request to said first clock in response to said detection of increase of the temperature.

17. Semiconductor chip according to claim 14 in the form of an ASIC video chip or a processor chip.

18. Clock control arrangement for a computing system including a processing unit, said control arrangement comprising:

a clock generator for generating at least a first clock signal having a first frequency and a second clock signal having a second higher frequency;

circuitry for monitoring the activity of said processing unit; and

a switching arrangement for switching the clocking of said processor to said second clock in response to the level of activity of said processing unit, the monitoring of said activity being based on the analysis of the number of transactions existing on a processing bus of the processing system.

Fig. 1

Fig. 2

Fig. 3

Fig. 4a

Fig. 4b

Overclocking,
Request lead

550

Control Unit

510

Saturation
Detection unit

511

530

521

541

Temp
Sensor

520

540

500

# Fig. 5

# EP 1 338 948 A1

**European Patent Office**

## EUROPEAN SEARCH REPORT

Application Number

EP 02 35 4035

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 216 235 B1 (THOMAS C DOUGLASS ET AL) 10 April 2001 (2001-04-10) | 1,5,6, 8-10,14, 17 | G06F1/32 |
| A | * column 3, line 10 - line 30 *<br>* column 4, line 23 - column 5, line 2 *<br>* column 5, line 39 - column 7, line 34 *<br>* column 8, line 35 - column 9, line 59; figures 2,3,5-8,10 * | 15,16,18 | |
| X | US 6 119 241 A (MICHAIL ET AL.) 12 September 2000 (2000-09-12) | 1,5,9, 10,14,17 | |
| A | * column 3, line 9 - column 7, line 8; figures * | 2,11,15, 16,18 | |
| X | US 2001/034850 A1 (ATKINSON LEE WARREN) 25 October 2001 (2001-10-25) | 1,8,10, 14,17 | |
| A | * paragraph [0019] - paragraph [0028] *<br>* paragraph [0033] - paragraph [0038]; figures 1,2,4 * | 2,11,18 | |
| A | US 5 758 133 A (EVOY DAVID R) 26 May 1998 (1998-05-26) | | **TECHNICAL FIELDS SEARCHED (Int.Cl.7)**<br><br>G06F |

The present search report has been drawn up for all claims

| Place of search | Date of completion of the search | Examiner |
|---|---|---|
| MUNICH | 11 October 2002 | Semple, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

## ANNEX TO THE EUROPEAN SEARCH REPORT
## ON EUROPEAN PATENT APPLICATION NO.

EP 02 35 4035

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2002

| Patent document cited in search report | | Publication date | Patent family member(s) | | Publication date |
|---|---|---|---|---|---|
| US 6216235 | B1 | 10-04-2001 | US | 5974557 A | 26-10-1999 |
| | | | US | 5752011 A | 12-05-1998 |
| | | | US | 2001047494 A1 | 29-11-2001 |
| US 6119241 | A | 12-09-2000 | US | 5832284 A | 03-11-1998 |
| | | | JP | 10198456 A | 31-07-1998 |
| | | | SG | 66414 A1 | 20-07-1999 |
| US 2001034850 | A1 | 25-10-2001 | US | 6233691 B1 | 15-05-2001 |
| | | | US | 6029249 A | 22-02-2000 |
| | | | US | 5625826 A | 29-04-1997 |
| | | | AU | 3250393 A | 19-07-1993 |
| | | | DE | 69224661 D1 | 09-04-1998 |
| | | | DE | 69224661 T2 | 27-08-1998 |
| | | | EP | 0617812 A1 | 05-10-1994 |
| | | | WO | 9312480 A1 | 24-06-1993 |
| US 5758133 | A | 26-05-1998 | NONE | | |

EPO FORM P0459

For more details about this annex : see Official Journal of the European Patent Office, No. 12/82